(19) Europäisches Patentamt
European Patent Office
Office européen des brevets

(11) **EP 3 065 482 B1**

(12) **EUROPEAN PATENT SPECIFICATION**

(45) Date of publication and mention
of the grant of the patent:
**18.09.2019 Bulletin 2019/38**

(21) Application number: **13900188.7**

(22) Date of filing: **25.12.2013**

(51) Int Cl.:
*H04W 16/14* (2009.01)     *H04W 16/04* (2009.01)
*H04W 16/02* (2009.01)     *H04W 74/00* (2009.01)
*H04W 72/04* (2009.01)     *H04W 48/12* (2009.01)

(86) International application number:
**PCT/CN2013/090472**

(87) International publication number:
**WO 2015/096075 (02.07.2015 Gazette 2015/26)**

(54) **METHOD AND APPARATUS FOR INDICATING AND DETERMINING TO USE FREQUENCY SPECTRUM**

ANZEIGE- UND FESTLEGUNGSVERFAHREN UND -VORRICHTUNG ZUR VERWENDUNG EINES FREQUENZSPEKTRUMS

PROCÉDÉ ET APPAREIL DESTINÉS À INDIQUER ET DÉTERMINER L'UTILISATION D'UN SPECTRE DE FRÉQUENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.09.2016 Bulletin 2016/36**

(73) Proprietor: **Huawei Technologies Co., Ltd.
Longgang District
Shenzhen, Guangdong 518129 (CN)**

(72) Inventors:
• **YAN, Zhiyu
Shenzhen
Guangdong 518129 (CN)**
• **MA, Sha
Shenzhen
Guangdong 518129 (CN)**

(74) Representative: **Gill Jennings & Every LLP
The Broadgate Tower
20 Primrose Street
London EC2A 2ES (GB)**

(56) References cited:
**WO-A1-2012/106843     WO-A1-2013/131257**

WO-A1-2013/131258     CN-A- 102 265 680
CN-A- 102 668 672     CN-A- 102 892 192
CN-A- 103 096 489     CN-A- 103 327 637
US-A1- 2009 047 956     US-A1- 2011 274 097
US-A1- 2012 094 681     US-A1- 2012 140 743

• **"3rd Generation Partnership Project; Technical Specification Group Radio Access Network; Evolved Universal Terrestrial Radio Access (E-UTRA); Radio Resource Control (RRC); Protocol specification (Release 10)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 19 December 2010 (2010-12-19) , pages 1-276, XP050462133,**
• **HUAWEI ET AL: "WF on RRM for LAA", 3GPP DRAFT; R1-152372 WF ON RRM FOR LAA V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 23 April 2015 (2015-04-23), XP050935189, Retrieved from the Internet: URL:http://www.3gpp.org/ftp/Meetings_3GPP_SYNC/RAN1/Docs/ [retrieved on 2015-04-23]**

## Description

## TECHNICAL FIELD

The present invention relates to the field of wireless communications technologies, and in particular, to methods for indicating and determining to use a spectrum, and an apparatus.

## BACKGROUND

In a current wireless network system, in order to avoid or reduce interference between different wireless technologies, a fixed spectrum allocation policy is widely used. That is, a national government agency performs spectrum allocation, and separately allocates some spectrums to a specified institution to provide a particular service, where a spectrum specified for allocation is referred to as a licensed spectrum (licensed band), and a spectrum not specified for allocation is referred to as an unlicensed spectrum (unlicensed band). According to the latest FCC international spectrum white paper issued, there may be more unlicensed spectrum resources than licensed spectrum resources. Therefore, when LTE (Long Term Evolution, Long Term Evolution) devices are applied in unlicensed spectrums, unlicensed spectrum resources can be effectively used, and further, more effective wireless access can be provided, and increasing mobile bandwidth service demands can be satisfied.

Wireless communications systems and operators have unrestricted access to Unlicensed spectrums. That is, a case in which multiple operators of multiple communications systems or different operators of a same communications system desire to occupy a same spectrum exists. For example, multiple operators deploy LTE communication nodes in a geographical area, and each operator does not consider a network planning status of another operator or another system when using same spectrums to send data; therefore, different operators may use a same cell identifier Cell-ID in these shared spectrums in the same geographical area.

Signals sent on some physical layer channels in an LTE system include predefined sequence signals, for example, a synchronization signal and a cell-specific reference signal (CRS, Cell-specific Reference Signals, also referred to as a common reference signal), and these sequence signals are related to only corresponding Cell-IDs. For a synchronization signal, a Zadoff-Chu sequence is used for a primary synchronization signal, and an m sequence is used for a secondary synchronization signal. For a particular Cell-ID, a particular primary synchronization signal sequence and secondary synchronization signal sequence are correspondingly generated according to a manner of generating a primary synchronization signal and a secondary synchronization signal. Similarly, a generation manner and a resource mapping manner of a CRS sequence in an LTE system are also related only to a Cell-ID of a cell. For a particular Cell-ID, a particular CRS signal sequence is correspondingly generated, and the signal is mapped to a same resource for sending.

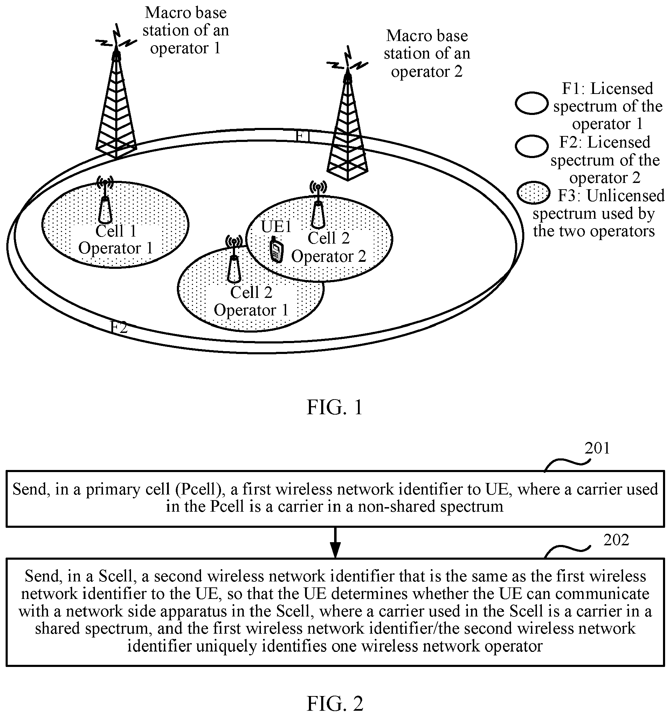

As shown in FIG. 1, some geographical areas of a Cell 2 planned by an operator 1 in an unlicensed spectrum are the same as those of a Cell 2 planned by an operator 2 in the unlicensed spectrum. Because each operator does not consider a network planning status of another operator or another system when using the same spectrum to send data, the operator 1 and the operator 2 may use a same Cell-ID in the Cell 2 planned by the operator 1 in the unlicensed spectrum and the Cell 2 planned by the operator 2 in the unlicensed spectrum. When a user's UE 1 of the operator 1 receives and demodulates a physical signal sequence of the operator 1 in the Cell 2, the UE 1 may receive a physical signal sequence of the operator 2 in the Cell 2. From the perspective of a received physical signal, a user cannot distinguish whether the received signal is from the Cell 2 of the operator 1 in the unlicensed spectrum or the Cell 2 of the operator 2 in the unlicensed spectrum. For example, in a process in which the UE 1 measures a CRS signal, an actual situation is that when a signal sent in the Cell 2 of the operator 1 arrives at the UE, the signal is severely interfered by a signal sent in the Cell 2 of the operator 2. However, from the perspective of a measured CRS signal, because CRS signals sent by the two operators are exactly the same, the CRS signal cannot reflect an interference status, and in addition, the UE can receive both the CRSs, so that quality of the measured CRS signal is very high. After a measurement result is reported to the Cell 2 of the operator 1, the operator 1 performs corresponding configuration, data scheduling, and the like on the UE according to the measurement result. Because configuration and data scheduling results are actually greatly inconsistent with communication quality of the UE in the Cell 2 of the operator 1, invalid or erroneous scheduling results are produced, which cause a problem of subsequent chaotic user data scheduling performed by a network.

In a current wireless network system, all systems deployed by different LTE system operators are in separate licensed spectrums, and a problem that different operators plan cells with a same Cell-ID in shared spectrums in a same geographical area does not exist.

WO 2013/131257 A1 is an example of a mobile network in which eNBs in the unlicensed band may transmit an operator ID.

As can be seen, when different operators use a shared spectrum to deploy LTE system networks, the different operators may plan a same Cell-ID in a shared spectrum in a same geographical area because an operator does not consider a network planning status of another operator when using the shared spectrum. This problem remains unresolved in the prior art.

US 2009/047956 A1 describes resolving cell identity collisions/conflicts in a cellular radio communications network.

WO 2012/106843 A1 describes controlled transmission signal deferring utilizing both licensed and unlicensed frequency bands for carrier aggregation.

WO 2013/131258 A1 describes a method to determine and recover from broken DL CC for unlicensed band LTE systems.

US 2012/094681 A1 describes a method for managing channel selection in a dynamic spectrum management network

## SUMMARY

Embodiments of the present invention provide methods for indicating and determining to use a spectrum, and an apparatus, so as to avoid a problem of chaotic user data scheduling performed by a network that is caused by an invalid or erroneous scheduling result that is produced because different operators plan cells with a same Cell-ID in a shared spectrum in a same geographical area. Aspects of the invention are provided in the claims.

By means of the methods for indicating and determining to use a spectrum, and the apparatus that are provided by the present invention, specifically, the following beneficial effects are achieved: In the present invention, a network side apparatus sends, in a Pcell and a Scell, a same wireless network identifier, so that UE can determine whether the UE can communicate, in the Scell, with the network side apparatus by using a carrier in a shared spectrum, and the UE can determine, according to a status of receiving two wireless network identifiers, whether different operators use a same Cell-ID in the shared spectrum and feed back a determining result to the network side apparatus. This avoids a problem of subsequent chaotic user data scheduling performed by a network that is caused by an invalid or erroneous scheduling result that is produced because different operators plan cells with a same Cell-ID in a shared spectrum in a same geographical area.

## BRIEF DESCRIPTION OF DRAWINGS

FIG. 1 is a schematic diagram showing that a Cell 2 planned by an operator 1 in an unlicensed spectrum and a Cell 2 planned by an operator 2 in the unlicensed spectrum are located in a same geographical area;

FIG. 2 is a flowchart of a method for indicating, by a network side, to use a spectrum according to an embodiment of the present invention;

FIG. 3 is a schematic diagram showing that a network side sends same PLMN information in both a primary cell and a secondary cell according to an embodiment of the present invention;

FIG. 4 is a schematic diagram showing that first common search space of a control channel is common search space of a Pcell according to an embodiment of the present invention;

FIG. 5 is a schematic diagram showing that first common search space of a control channel is common search space of a Scell according to an embodiment of the present invention;

FIG. 6 is a schematic diagram showing that a resource that corresponds to a second downlink shared channel is a preset particular resource according to an embodiment of the present invention;

FIG. 7 is a structural diagram of a first network side apparatus according to an embodiment of the present invention.

## DESCRIPTION OF EMBODIMENTS

Methods for indicating and determining to use a spectrum, and an apparatus that are provided by the present invention are described in further detail below with reference to accompanying drawings and embodiments.

The present invention resolves a problem of planning a Cell-ID when different operators use a shared spectrum to deploy networks of an LTE system, and resolves a problem of chaotic user data scheduling performed by a network that may be caused by an invalid or erroneous scheduling result that is produced because different operators plan cells with a same Cell-ID in a shared spectrum in a same geographical area because an operator does not consider a network planning status of another operator when using the shared spectrum.

For a network side apparatus, Embodiment 1 of the present invention provides a method for indicating to use a spectrum, and as shown in FIG. 2, the method includes:

Step 201. Send, in a primary cell Pcell (Primary cell), a first wireless network identifier to UE, where a carrier used in the Pcell is a carrier in a non-shared spectrum.

Step 202. Send, in a secondary cell Scell (Secondary cell), a second wireless network identifier that is the same as the first wireless network identifier to the UE, so that the UE determines, according to a status of receiving the two wireless network identifiers, whether the UE can communicate with a network side in the Scell, where a carrier used in the Scell is a carrier in a shared spectrum, and the first wireless network identifier/the second wireless network identifier can uniquely identify one wireless network operator within a range of a same geographical area.

The carrier in the non-shared spectrum is used in the Pcell; therefore, the UE can receive the first wireless network identifier that is sent in the Pcell by the network side. As the carrier in the shared spectrum is used in the Scell, and when different operators plan a same Cell-ID in the shared spectrum in the same geographical area, the UE may not receive or may receive a wireless network identifier that is different from that in the Pcell, the UE needs to search for the second wireless network identifier that is sent in the Scell by the network side, and may determine, according to a status of receiving the second wireless network identifier in the shared spectrum, whether a network side apparatus can communicate with the UE on a resource in the shared spectrum.

A sequence of performing step 201 and step 202 is not limited in this embodiment of the present invention, that is, the two wireless network identifiers may be sent simultaneously, or may be sent separately.

The network side apparatus is a base station, and the base station may be, for example, a base transceiver station (BTS), a node B (Node B), an evolved node B (eNode B or eNB), a home Node B (Home Node B or HNB), an evolved home Node B (Home eNode B or HeNB), a macro base station, or another similar apparatus.

The first/second wireless network identifier used to uniquely identify a wireless network operator may be, but is not limited to, partial or all content (referred to as PLMN information in this embodiment) of a public land mobile network (Public Land Mobile Network, public land mobile network) identifier PLMN ID.

PLMN = MCC + MNC, where the MCC (Mobile Country Code, mobile country code) is a three-digit number, and the MNC (Mobile Network Code) is a mobile network code allocated by the government, and is two-digit number or a three-digit number.

PLMN information is a part, which can distinguish different operators in a same geographical area, in a PLMN. For example, because MCC information in a PLMN in a same geographical area is the same, PLMN information to be sent may be MNC information in the PLMN.

Optionally, the network side is configured to send, in the Pcell, the first wireless network identifier to the UE, and send, in the Scell, the second wireless network identifier to the UE by broadcasting system information block SIB-1.

Optionally, after sending, in the Pcell, the first wireless network identifier to the UE, and sending, in the Scell, the second wireless network identifier to the UE, the network side further performs any one of the following steps:

(1) when determining that feedback information that is returned by the UE and that includes a signal measurement result for the Scell is not received, or when determining that feedback information that is returned by the UE and that indicates that a signal measurement result for the Scell is invalid is received, or when determining that feedback information that is returned by the UE and that instructs to change a cell identifier of the Scell is received, skipping performing resource configuration, data scheduling, and the like for the UE;

(2) when determining that the feedback information that is returned by the UE and that includes the signal measurement result for the Scell is not received, or when determining that the feedback information that is returned by the UE and that indicates that the signal measurement result for the Scell is invalid is received, or when determining that the feedback information that is returned by the UE and that instructs to change the cell identifier of the Scell is received, changing the cell identifier of the Scell; and

(3) when the feedback information that is returned by the UE and that includes the signal measurement result for the Scell is received, performing resource configuration and data scheduling for the UE according to the signal measurement result for the Scell.

According to an information feedback of the UE, the network side apparatus replaces a Cell-ID of a carrier in a shared spectrum or does not perform resource configuration, data scheduling, or the like for the UE. This avoids a problem of chaotic user data scheduling performed by a network that is caused by an invalid or erroneous scheduling result that is produced because different operators plan cells with a same Cell-ID in a shared spectrum in a same geographical area.

A specific manner of sending, in the Scell, the wireless network identifier by the network side may be any one of the following manners:

Manner 1: The second wireless network identifier is sent, in the Scell, to the UE by using a first downlink shared channel, where a transmission channel of scheduling information that corresponds to the first downlink shared channel is in first common search space of a control channel, and the first common search space of a control channel is common search space of the Pcell or common search space of the Scell.

Manner 2: The second wireless network identifier is sent, in the Scell, to the UE by using a second downlink shared channel, where a resource that corresponds to the second downlink shared channel is a preset resource that corresponds to a cell identifier of the Scell.

Manner 3: The second wireless network identifier and a preset sequence that is used to identify the second wireless network identifier are sent, in the Scell, to the UE.

It may be set in such a manner that there is a preset location relationship between a location at which a preset sequence is sent and a location at which a wireless network identifier is sent, for example, the second wireless network identifier is transmitted before the preset sequence or after the preset sequence. In this way, when the UE detects, according to a stored preset sequence, that the preset sequence is received, the UE can identify the second network identifier by using the preset location relationship. Certainly, a preset operation may also be performed on the preset sequence and the second wireless network identifier, for example, an exclusive OR operation or the like is performed, and in this way, the UE side may perform an inverse operation on a received signal by using the first wireless network identifier of the Pcell, and determine whether a result of the inverse operation is related to the stored preset sequence, and may further determine whether the wireless network identifier sent in the Scell is correctly received.

Optionally, the second wireless network identifier and the preset sequence are transmitted on the third downlink shared channel in a manner of scrambling the preset sequence by using the second wireless network identifier.

The preset sequence is any one or more of the following sequences: a primary synchronization signal PSS sequence, a secondary synchronization signal SSS sequence, and a cell-specific reference signal CRS sequence.

Embodiment 3 of the present invention provides, in combination of a network side and a UE side, a method for indicating to use a spectrum and a method for determining, by UE, to use a spectrum.

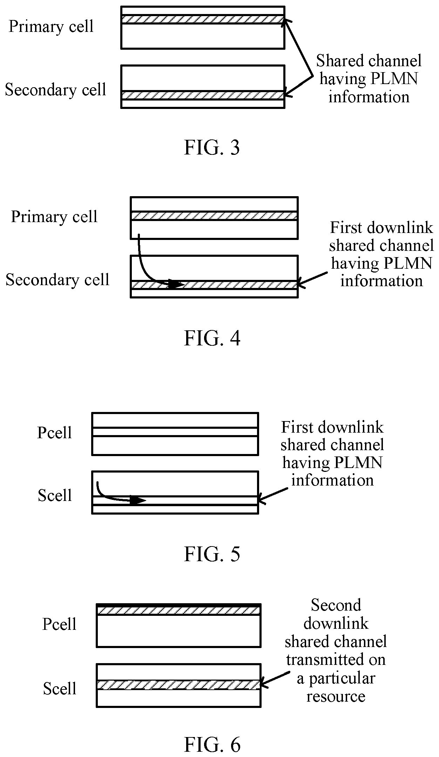

A carrier in a non-shared spectrum is used in a Pcell, and a carrier in a shared spectrum is used in a Scell. As shown in FIG. 3, a network side sends, in the Pcell, a first wireless network identifier, and sends, in the Scell, a second wireless network identifier, where the first wireless network identifier and the second wireless network are a same PLMN. UE receives PLMN information sent in the Pcell by the network side, and searches for PLMN information sent in the Scell by the network side. When the PLMN information that is sent in the Scell by the network side is received, and it is determined that the PLMN information is consistent with the PLMN information that is sent in the Pcell by the network side, the UE determines that communication with the network side can be performed in the Scell. When the PLMN that is sent in the Scell by the network side is not received, or when the PLMN information that is sent in the Scell by the network side is received, and it is determined that the PLMN information is inconsistent with the PLMN information that is sent in the Pcell by the network side, the UE determines that communication with the network side cannot be performed in the Scell.

Optionally, when determining that communication with the network side can be performed in the Scell, the UE feeds back a signal measurement result for the Scell to the network side. When receiving feedback information that is returned by the UE and that includes the signal measurement result for the Scell, the network side performs resource configuration and data scheduling for the UE according to the signal measurement result for the Scell.

When determining that communication with the network side cannot be performed in the Scell, the UE does not feed back a signal measurement result for the Scell to the network side, or feeds back, to the network side, feedback information that indicates that the signal measurement result for the Scell is invalid, or feeds back, to the network side, feedback information that instructs to change a cell identifier of the Scell. When determining that the feedback information that is returned by the UE and that includes the signal measurement result for the Scell is not received, or when determining that the feedback information that is returned by the UE and that indicates that the signal measurement result for the Scell is invalid is received, or when determining that the feedback information that is returned by the UE and that instructs to change the cell identifier of the Scell is received, the network side does not perform resource configuration or data scheduling for the UE, or changes the cell identifier of the Scell.

A specific implementation manner of sending, in the Scell, the PLMN by the network side and searching, by the UE, for the PLMN in the Scell is as follows:

Manner 1

The network side sends, in the Scell, the PLMN to the UE by using a first downlink shared channel. The UE searches, by using the first downlink shared channel, for the PLMN that is sent in the Scell by the network side.

A transmission channel of scheduling information that corresponds to the first downlink shared channel is in first common search space (Common search space) of a control channel, and the first common search space of a control channel is common search space of the Pcell or common search space of the Scell.

If the first common search space of a control channel is the common search space of the Pcell, as shown in FIG. 4, the scheduling information of the first downlink shared channel in the Scell is sent to the UE by using a control channel in the Pcell, without a need to increase a quantity of times of blind detection performed by the UE in the Scell or to allocate common search space to the Scell.

If the first common search space of a control channel is the common search space of the Scell, as shown in FIG. 5, the scheduling information of the first downlink shared channel in the Scell is sent to the UE by using a control channel in the Scell.

The UE may not detect PLMN information when receiving and demodulating PLMN information in the Scell according to the scheduling information, received on the control channel in the Pcell/Scell, of the first downlink shared channel.

That the PLMN information is not detected may also be caused by a scenario 2 shown in FIG. 1. That is, another operator deploys another cell with a same Cell-ID in a same geographical area, and UE 1 is originally UE of an operator 1. The UE detects a first downlink shared channel in Cell 2/Operator 1 by receiving the scheduling information, sent on the control channel in the Pcell by the network side, of the first downlink shared channel. However, the first downlink shared channel in Cell 2/Operator 1 is interfered by Cell 2/Operator 2, and in this case, the UE may not detect the first downlink shared channel in Cell 2/Operator 1, and as a result, cannot detect the PLMN information in the Scell. Alternatively, the UE detects a first downlink shared channel in Cell 2/Operator 1 by receiving the scheduling information, sent on the control channel in the Scell by the network side, of the first downlink shared channel. However, the first downlink shared channel in Cell 2/Operator 1 and a transmission channel of scheduling information that corresponds to the first downlink shared channel are interfered by Cell 2/Operator 2, and in this case, the UE may not detect the scheduling information of the first downlink shared channel in Cell 2/Operator 1 and information on the first downlink shared channel, and as a result, cannot detect the PLMN information in the Scell.

Manner 2

The network side sends, in the Scell, the PLMN to the UE by using a second downlink shared channel, and the UE searches, by using the second downlink shared channel, for the PLMN that is sent in the Scell by the network side, where a resource that corresponds to the second downlink shared channel is a preset resource that corresponds to a cell identifier of the Scell, as shown in FIG. 6.

When receiving and demodulating the PLMN information in the Scell on the preset resource, the UE may detect that the PLMN information in the Scell is different from the PLMN information in the Pcell.

That the PLMN information is not detected may also be caused by the scenario 2 shown in FIG. 1. The second downlink shared channel in Cell 2/Operator 1 is interfered by Cell 2/Operator 2, and in this case, the UE may not detect the second downlink shared channel in Cell 2/Operator 1, and as a result, cannot detect the PLMN information in the Scell.

Manner 3

The network side sends, in the Scell, the PLMN to the UE by using a third downlink shared channel, and the UE searches, by using the third downlink shared channel, for the PLMN that is sent in the Scell by the network side, where an agreed preset sequence such as a PSS sequence, an SSS sequence, or a CRS sequence is transmitted on the third downlink shared channel.

Optionally, the network side transmits the PLMN information and the preset sequence on the third downlink shared channel in a manner of scrambling the preset sequence by using the PLMN information. The UE descrambles a received signal by using the PLMN that is sent in the Pcell by the network side; determines that the descrambled signal is related to the preset sequence stored by the UE; and determines that the PLMN that is sent in the Scell by the network side is received, and determines that the PLMN is consistent with the PLMN that is sent in the Pcell by the network side. For example, information about a CRS sequence transmitted on the third downlink shared channel in the Scell is $S_1$, $S_2$, ..., and $S_N$, where N is a length of the CRS sequence, and PLMN information transmitted on the third downlink shared channel in the Scell is $'S'_1$, $'S'_2$, ..., and $S'_M$, where M is a sequence length of the PLMN information, and $M \leq N$. In this case, a sequence actually transmitted on the third downlink shared channel in the Scell is X, where

$$X_n = S_{n1} + S'_{n2}, \quad X_{n+1} = S_{n1+1} + S'_{n2+1}, \ldots.$$

When receiving and demodulating the PLMN information in the Scell, the UE may descramble the received signal according to the PLMN information that is received in the Pcell; the UE then compares the signal obtained after descrambling with preset CRS sequence information transmitted on the third downlink shared channel. If the signal obtained after descrambling is related to the CRS sequence information stored by the UE, the UE determines that the PLMN information transmitted on the third downlink shared channel in the Scell by the network side is the same as the PLMN information that is transmitted in the Pcell by the network side. Otherwise, if the signal obtained after descrambling is not related to the CRS sequence information stored by the UE, the UE determines that the PLMN information transmitted on the third downlink shared channel in the Scell by the network side is different from the PLMN information that is transmitted in the Pcell by the network side.

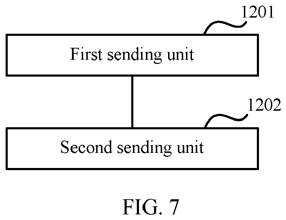

Embodiment 6 of the present invention provides a network side apparatus, and as shown in FIG. 7, the apparatus includes:

a first sending unit 1201, configured to send, in a primary cell Pcell, a first wireless network identifier to UE, where a carrier used in the Pcell is a carrier in a non-shared spectrum; and
a second sending unit 1202, configured to send, in a secondary cell Scell, a second wireless network identifier that is the same as the first wireless network identifier to the UE, so that the UE determines whether the UE can communicate with a network side in the Scell, where a carrier used in the Scell is a carrier in a shared spectrum, and the first wireless network identifier/the second wireless network identifier uniquely identifies one wireless network operator.

Optionally, the apparatus further includes: a scheduling stopping unit, configured to: after the first wireless network is sent, in the Pcell, to the UE and the second wireless network identifier is sent, in the Scell, to the UE, when determining that feedback information that is returned by the UE and that includes a signal measurement result for the Scell is not received, or when determining that feedback information that is returned by the UE and that indicates that a signal measurement result for the Scell is invalid is received, or when determining that feedback information that is returned by the UE and that instructs to change a cell identifier of the Scell is received, skip performing resource configuration and data scheduling for the UE or changing the cell identifier of the Scell. Optionally, the apparatus further includes: a scheduling unit, configured to: after the first wireless network identifier is sent, in the Pcell, to the UE and the second wireless network identifier is sent, in the Scell, to the UE, when the feedback information that is returned by the UE and that includes the signal measurement result for the Scell is received, perform resource configuration and data scheduling for the UE according to the signal measurement result for the Scell.

Optionally, the second sending unit specifically sends, in the Scell, the second wireless network identifier to the UE by using a first downlink shared channel, where a transmission channel of scheduling information that corresponds to the first downlink shared channel is in first common search space of a control channel, and the first common search space of a control channel is common search space of the Pcell or common search space of the Scell.

Optionally, the second sending unit is specifically configured to send, in the Scell, the second wireless network identifier to the UE by using a second downlink shared channel, where a resource that corresponds to the second downlink shared channel is a preset resource that corresponds to a cell identifier of the Scell.

Optionally, the second sending unit is specifically configured to send, in the Scell to the UE by using a third downlink shared channel, the second wireless network identifier and a preset sequence that is used to identify the second wireless network identifier.

Optionally, the second sending unit is specifically configured to send the second wireless network identifier and the preset sequence to the UE on the third downlink shared channel in a manner of scrambling the preset sequence by using the second wireless network identifier.

Optionally, the preset sequence used by the second sending unit is any one or more of the following sequences:

a primary synchronization signal PSS sequence, a secondary synchronization signal SSS sequence, and a cell-specific reference signal CRS sequence.

Optionally, the first wireless network identifier/the second wireless network identifier is partial or all content of a public land mobile network identifier PLMN ID.

Optionally, the first wireless network identifier/the second wireless network identifier is a mobile network code MNC in a PLMN ID.

By broadcasting system information block SIB-1, the first sending unit sends, in the Pcell, the first wireless network identifier to the UE, and the second sending unit sends, in the Scell, the second wireless network identifier to the UE.

Embodiment 7 of the present invention provides a network side apparatus, including a processor and a data transceiver interface, where

the processor is configured to: send, in a primary cell Pcell, a first wireless network identifier to UE, where a carrier used in the Pcell is a carrier in a non-shared spectrum; and send, in a secondary cell Scell, a second wireless network identifier that is the same as the first wireless network identifier to the UE, so that the UE determines whether the UE can communicate with a network side in the Scell, where a carrier used in the Scell is a carrier in a shared spectrum, and the first wireless network identifier/the second wireless network identifier uniquely identifies one wireless network operator; and
the data transceiver interface is configured to implement data communication between the processor and the UE.

Embodiment 9 of the present invention provides UE, including a processor and a data transceiver interface, where

the processor is configured to: receive a first wireless network identifier that is sent in a primary cell Pcell by a network side, and search for a second wireless network identifier that is sent in a secondary cell Scell by the network side, where a carrier used in the Pcell is a carrier in a non-shared spectrum, and a carrier used in the Scell is a carrier in a shared spectrum; when the second wireless network identifier that is sent in the Scell by the network side is received, and it is determined that the second wireless network identifier is consistent with the first wireless network identifier that is sent in the Pcell by the network side, determine that communication with the network side can be performed in the Scell; and when the second wireless network identifier that is sent in the Scell by the network side is not received, or when the second wireless network identifier that is sent in the Scell by the network side is received, and it is determined that the second wireless network identifier is inconsistent with the first wireless network identifier that is sent in the Pcell by the network side, determine that communication with the network side cannot be performed in the Scell; and
the data transceiver interface is configured to implement data communication between the processor and the network side.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

**Claims**

1.  A method performed by a base station for indicating to use a spectrum, comprising:

    sending (201), in a primary cell, Pcell, a first wireless network identifier to user equipment, UE, wherein a carrier used in the Pcell is a carrier in a licensed spectrum; and
sending (202), in a secondary cell, Scell, a second wireless network identifier that is the same as the first wireless network identifier to the UE, wherein a carrier used in the Scell is a carrier in a unlicensed spectrum, and the first wireless network identifier/the second wireless network identifier uniquely identifies one wireless network operator;
when determining that feedback information that is returned by the UE and that comprises a signal measurement result for the Scell is not received, or when determining that feedback information that is returned by the UE and that indicates that a signal measurement result for the Scell is invalid is received, or when determining that feedback information that is returned by the UE and that instructs to change a cell identifier of the Scell is received, changing the cell identifier of the Scell; and
when the feedback information that is returned by the UE and that comprises the signal measurement result for the Scell is received, performing resource configuration and data scheduling for the UE according to the signal measurement result for the Scell; and
wherein the sending, in the Scell, the second wireless network identifier to the UE specifically comprises:

    sending, in the Scell, the second wireless network identifier to the UE by using a first downlink shared channel, wherein a transmission channel of scheduling information that corresponds to the first downlink shared channel is in first common search space of a control channel, and the first common search space of a control channel is common search space of the Pcell or common search space of the Scell; or
    sending, in the Scell, the second wireless network identifier to the UE by using a second downlink shared channel, wherein a resource that corresponds to the second downlink shared channel is a preset resource that corresponds to a cell identifier of the Scell; or
    sending, in the Scell to the UE by using a third downlink shared channel, the second wireless network identifier and a preset sequence that is used to identify the second wireless network identifier.

2.  The method according to claim 1, wherein the sending, in the Scell to the UE by using the third downlink shared channel, the second wireless network identifier and the preset sequence that is used to identify the second wireless network identifier specifically comprises:

sending the second wireless network identifier and the preset sequence to the UE on the third downlink shared channel in a manner of scrambling the preset sequence by using the second wireless network identifier, wherein the preset sequence is any one or more of the following sequences: a primary synchronization signal, PSS, sequence, a secondary synchronization signal, SSS, sequence, and a cell-specific reference signal, CRS, sequence.

3. The method according to claim 1, wherein the first wireless network identifier/the second wireless network identifier is a mobile country code, MCC, and a mobile network code, MNC, in a public land mobile network identifier, PLMN ID, or the first wireless network identifier/the second wireless network identifier is an MNC in a PLMN ID.

4. The method according to claim 1, wherein the sending, in the Pcell, the first wireless network identifier to UE specifically comprises:

sending, in the Pcell, the first wireless network identifier to the UE by broadcasting system information block, SIB-1; and
the sending, in the Scell, the second wireless network identifier to the UE specifically comprises:
sending, in the Scell, the second wireless network identifier to the UE by using the broadcast system information block, SIB-1.

5. A base station, comprising:

a first sending unit (1201), configured to send, in a primary cell, Pcell, a first wireless network identifier to UE, wherein a carrier used in the Pcell is a carrier in a licensed spectrum; and
a second sending unit (1202), configured to send, in a secondary cell, Scell, a second wireless network identifier that is the same as the first wireless network identifier to the UE, wherein a carrier used in the Scell is a carrier in an unlicensed spectrum, and the first wireless network identifier/the second wireless network identifier uniquely identifies one wireless network operator;
a scheduling stopping unit, configured to: after the first wireless network is sent, in the Pcell, to the UE and the second wireless network identifier is sent, in the Scell, to the UE, when determining that feedback information that is returned by the UE and that comprises a signal measurement result for the Scell is not received, or when determining that feedback information that is returned by the UE and that indicates that a signal measurement result for the Scell is invalid is received, or when determining that feedback information that is returned by the UE and that instructs to change a cell identifier of the Scell is received, changing the cell identifier of the Scell; and
a scheduling unit, configured to: after the first wireless network identifier is sent, in the Pcell, to the UE and the second wireless network identifier is sent, in the Scell, to the UE, when the feedback information that is returned by the UE and that comprises the signal measurement result for the Scell is received, perform resource configuration and data scheduling for the UE according to the signal measurement result for the Scell; and wherein
the second sending unit is specifically configured to send, in the Scell, the second wireless network identifier to the UE by using a first downlink shared channel, wherein a transmission channel of scheduling information that corresponds to the first downlink shared channel is in first common search space of a control channel, and the first common search space of a control channel is common search space of the Pcell or common search space of the Scell; or
the second sending unit is specifically configured to send, in the Scell, the second wireless network identifier to the UE by using a second downlink shared channel, wherein a resource that corresponds to the second downlink shared channel is a preset resource that corresponds to a cell identifier of the Scell; or
the second sending unit is specifically configured to send, in the Scell to the UE by using a third downlink shared channel, the second wireless network identifier and a preset sequence that is used to identify the second wireless network identifier.

6. The base station according to claim 5, wherein the first sending unit is specifically configured to send, in the Pcell, the first wireless network identifier to the UE by broadcasting system information block, SIB-1; and
the second sending unit is specifically configured to send, in the Scell, the second wireless network identifier to the UE by using the broadcast system information block, SIB-1.

7. A system comprising:
a base station, the base station comprising:

a first sending unit (1201), configured to send, in a primary cell, Pcell, a first wireless network identifier to a user equipment, UE, wherein a carrier used in the Pcell is a carrier in an unlicensed spectrum; and
a second sending unit (1202), configured to send, in a secondary cell, Scell, a second wireless network identifier that is the same as the first wireless network identifier to the UE, wherein a carrier used in the Scell is a carrier in an unlicensed spectrum, and the first wireless network identifier/the second wireless network identifier uniquely identifies one wireless network operator; and wherein

the second sending unit is specifically configured to send, in the Scell, the second wireless network identifier to the UE by using a first downlink shared channel, wherein a transmission channel of scheduling information that corresponds to the first downlink shared channel is in first common search space of a control channel, and the first common search space of a control channel is common search space of the Pcell or common search space of the Scell; or

the second sending unit is specifically configured to send, in the Scell, the second wireless network identifier to the UE by using a second downlink shared channel, wherein a resource that corresponds to the second downlink shared channel is a preset resource that corresponds to a cell identifier of the Scell; or

the second sending unit is specifically configured to send, in the Scell to the UE by using a third downlink shared channel, the second wireless network identifier and a preset sequence that is used to identify the second wireless network identifier;

> a UE, the UE comprising:

>> means configured to receive the first wireless network identifier that is sent in a Pcell by the base station, and search for the second wireless network identifier that is sent in the Scell by the base station, and when the second wireless network identifier is received, and it is determined that the second wireless network identifier is consistent with the first wireless network identifier, determining that communication with the base station can be performed in the Scell, or when the second wireless network identifier is not received, or when the second wireless network identifier is received and it is determined that the second wireless network identifier is inconsistent with the first wireless network identifier, determining that communication with the base station cannot be performed in the Scell; means configured to feed back a signal measurement result for the Scell to the base station when it is determined that communication with the base station can be performed in the Scell; and means configured to skip feeding back a signal measurement result for the Scell to the base station, or feeding back to the base station feedback information that indicates that a signal measurement result for the Scell is invalid, or feeding back to the base station feedback information that instructs the base station to change a cell identifier of the Scell;

> the base station further comprising:

>> a scheduling stopping unit, configured to: after the first wireless network is sent, in the Pcell, to the UE and the second wireless network identifier is sent, in the Scell, to the UE, when determining that feedback information that is returned by the UE and that comprises a signal measurement result for the Scell is not received, or when determining that feedback information that is returned by the UE and that indicates that a signal measurement result for the Scell is invalid is received, or when determining that feedback information that is returned by the UE and that instructs to change a cell identifier of the Scell is received, changing the cell identifier of the Scell; and a scheduling unit, configured to: after the first wireless network identifier is sent, in the Pcell, to the UE and the second wireless network identifier is sent, in the Scell, to the UE, when the feedback information that is returned by the UE and that comprises the signal measurement result for the Scell is received, perform resource configuration and data scheduling for the UE according to the signal measurement result for the Scell.

8. A method comprising:
   at a base station:

   > sending, in a primary cell, Pcell, a first wireless network identifier to a user equipment, UE, wherein a carrier used in the Pcell is a carrier in an unlicensed spectrum; and sending, in a secondary cell, Scell, a second wireless network identifier that is the same as the first wireless network identifier to the UE, wherein a carrier used in the Scell is a carrier in an unlicensed spectrum, and the first wireless network identifier/the second wireless network identifier uniquely identifies one wireless network operator; and

wherein the sending, in the Scell, the second wireless network identifier to the UE specifically comprises:

sending, in the Scell, the second wireless network identifier to the UE by using a first downlink shared channel, wherein a transmission channel of scheduling information that corresponds to the first downlink shared channel is in first common search space of a control channel, and the first common search space of a control channel is common search space of the Pcell or common search space of the Scell; or

sending, in the Scell, the second wireless network identifier to the UE by using a second downlink shared channel, wherein a resource that corresponds to the second downlink shared channel is a preset resource that corresponds to a cell identifier of the Scell; or

sending, in the Scell to the UE by using a third downlink shared channel, the second wireless network identifier and a preset sequence that is used to identify the second wireless network identifier;

at the UE:

receiving the first wireless network identifier that is sent in a Pcell by the base station, and search for the second wireless network identifier that is sent in the Scell by the base station, and when the second wireless network identifier is received, and it is determined that the second wireless network identifier is consistent with the first wireless network identifier, determining that communication with the base station can be performed in the Scell, or when the second wireless network identifier is not received, or when the second wireless network identifier is received and it is determined that the second wireless network identifier is inconsistent with the first wireless network identifier, determining that communication with the base station cannot be performed in the Scell;

feeding back a signal measurement result for the Scell to the base station when it is determined that communication with the base station can be performed in the Scell; or

skipping feeding back a signal measurement result for the Scell to the base station, or feeding back to the base station feedback information that indicates that a signal measurement result for the Scell is invalid, or feeding back to the base station feedback information that instructs the base station to change a cell identifier of the Scell;

at the base station:

when determining that feedback information that is returned by the UE and that comprises a signal measurement result for the Scell is not received, or when determining that feedback information that is returned by the UE and that indicates that a signal measurement result for the Scell is invalid is received, or when determining that feedback information that is returned by the UE and that instructs to change a cell identifier of the Scell is received, changing the cell identifier of the Scell; or

when the feedback information that is returned by the UE and that comprises the signal measurement result for the Scell is received, perform resource configuration and data scheduling for the UE according to the signal measurement result for the Scell.

## Patentansprüche

1. Verfahren, das durch eine Basisstation durchgeführt wird, zum Anzeigen, ein Spektrum zu verwenden, umfassend:

Senden (201), in einer Primärzelle, Pcell, einer ersten Drahtlosnetzwerkkennung an ein Benutzergerät, UE, wobei ein in der Pcell verwendeter Träger ein Träger in einem lizenzierten Spektrum ist; und

Senden (202), in einer Sekundärzelle, Scell, einer zweiten Drahtlosnetzwerkkennung, welche dieselbe wie die erste Drahtlosnetzwerkkennung ist, an das UE, wobei ein in der Scell verwendeter Träger ein Träger in einem unlizenzierten Spektrum ist und die erste Drahtlosnetzwerkkennung/die zweite Drahtlosnetzwerkkennung einen Drahtlosnetzwerkbetreiber eindeutig identifiziert;

wenn bestimmt wird, dass Rückmeldeinformationen, die durch das UE zurückgegeben werden und die ein Signalmessergebnis für die Scell umfassen, nicht empfangen werden, oder wenn bestimmt wird, dass Rückmeldeinformationen empfangen werden, die durch das UE zurückgegeben werden und die anzeigen, dass ein Signalmessergebnis für die Scell ungültig ist, oder wenn bestimmt wird, dass Rückmeldeinformationen empfangen werden, die durch das UE zurückgegeben werden und die anweisen, eine Zellenkennung der Scell zu ändern, Ändern der Zellenkennung der Scell; und,

wenn die Rückmeldeinformationen, die durch das UE zurückgegeben werden und die das Signalmessergebnis für die Scell umfassen, empfangen werden, Durchführen von Ressourcenkonfiguration und Daten-"Scheduling" für das UE gemäß dem Signalmessergebnis für die Scell; und

wobei das Senden, in der Scell, der zweiten Drahtlosnetzwerkkennung an das UE spezifisch umfasst:

> Senden, in der Scell, der zweiten Drahtlosnetzwerkkennung an das UE durch Verwendung eines ersten "Downlink Shared Channel", wobei ein Sendekanal von "Scheduling"-Informationen, der dem ersten "Downlink Shared Channel" entspricht, in einem ersten gemeinsamen Suchraum eines Steuerkanals ist und der erste gemeinsame Suchraum eines Steuerkanals ein gemeinsamer Suchraum der Pcell oder ein gemeinsamer Suchraum der Scell ist; oder
>
> Senden, in der Scell, der zweiten Drahtlosnetzwerkkennung an das UE durch Verwendung eines zweiten "Downlink Shared Channel", wobei eine Ressource, die dem zweiten "Downlink Shared Channel" entspricht, eine voreingestellte Ressource ist, die einer Zellenkennung der Scell entspricht; oder
>
> Senden, in der Scell an das UE durch Verwendung eines dritten "Downlink Shared Channel", der zweiten Drahtlosnetzwerkkennung und einer voreingestellten Sequenz, die verwendet wird, um die zweite Drahtlosnetzwerkkennung zu identifizieren.

2. Verfahren nach Anspruch 1, wobei das Senden, in der Scell an das UE durch Verwendung des dritten "Downlink Shared Channel", der zweiten Drahtlosnetzwerkkennung und der voreingestellten Sequenz, die verwendet wird, um die zweite Drahtlosnetzwerkkennung zu identifizieren, spezifisch umfasst:

Senden der zweiten Drahtlosnetzwerkkennung und der voreingestellten Sequenz an das UE auf dem dritten "Downlink Shared Channel" nach Art des "Scrambelns" der voreingestellten Sequenz durch Verwendung der zweiten Drahtlosnetzwerkkennung, wobei die voreingestellte Sequenz eine beliebige oder mehrere der folgenden Sequenzen ist: eine Primärsynchronisationssignal(PSS)-Sequenz, eine Sekundärsynchronisationssignal(SSS)-Sequenz und eine zellenspezifische Referenzsignal(CRS)-Sequenz.

3. Verfahren nach Anspruch 1, wobei die erste Drahtlosnetzwerkkennung/die zweite Drahtlosnetzwerkkennung ein "Mobile Country Code", MCC, und ein "Mobile Network Code", MNC, in einer "Public Land Mobile Network"-Kennung, PLMN ID, ist oder die erste Drahtlosnetzwerkkennung/die zweite Drahtlosnetzwerkkennung ein MNC in einer PLMN ID ist.

4. Verfahren nach Anspruch 1, wobei das Senden, in der Pcell, der ersten Drahtlosnetzwerkkennung an UE spezifisch umfasst:

Senden, in der Pcell, der ersten Drahtlosnetzwerkkennung an das UE durch Rundsenden eines Systeminformationsblocks, SIB-1; und wobei das Senden, in der Scell, der zweiten Drahtlosnetzwerkkennung an das UE spezifisch umfasst:
Senden, in der Scell, der zweiten Drahtlosnetzwerkkennung an das UE durch Verwenden des rundgesendeten Systeminformationsblocks, SIB-1.

5. Basisstation, umfassend:

eine erste Sendeeinheit (1201), die dazu ausgebildet ist, in einer Primärzelle, Pcell, eine erste Drahtlosnetzwerkkennung an UE zu senden, wobei ein in der Pcell verwendeter Träger ein Träger in einem lizenzierten Spektrum ist; und eine zweite Sendeeinheit (1202), die dazu ausgebildet ist, in einer Sekundärzelle, Scell, eine zweite Drahtlosnetzwerkkennung, welche dieselbe wie die erste Drahtlosnetzwerkkennung ist, an das UE zu senden, wobei ein in der Scell verwendeter Träger ein Träger in einem unlizenzierten Spektrum ist und die erste Drahtlosnetzwerkkennung/die zweite Drahtlosnetzwerkkennung einen Drahtlosnetzwerkbetreiber eindeutig identifiziert;
eine "Scheduling"-Stopp-Einheit, die dazu ausgebildet ist: nachdem das erste Drahtlosnetzwerk, in der Pcell, an das UE gesendet wird und die zweite Drahtlosnetzwerkkennung, in der Scell, an das UE gesendet wird, wenn bestimmt wird, dass Rückmeldeinformationen, die durch das UE zurückgegeben werden und die ein Signalmessergebnis für die Scell umfassen, nicht empfangen werden, oder wenn bestimmt wird, dass Rückmeldeinformationen empfangen werden, die durch das UE zurückgegeben werden und die anzeigen, dass ein Signalmessergebnis für die Scell ungültig ist, oder wenn bestimmt wird, dass Rückmeldeinformationen empfangen werden, die durch das UE zurückgegeben werden und die anweisen, eine Zellenkennung der Scell zu ändern, die Zellenkennung der Scell zu ändern; und,

eine "Scheduling"-Einheit, die dazu ausgebildet ist: nachdem die erste Drahtlosnetzwerkkennung, in der Pcell, an das UE gesendet wird und die zweite Drahtlosnetzwerkkennung, in der Scell, an das UE gesendet wird, wenn die Rückmeldeinformationen, die durch das UE zurückgegeben werden und die das Signalmessergebnis für die Scell umfassen, empfangen werden, Ressourcenkonfiguration und Daten-"Scheduling" für das UE gemäß dem Signalmessergebnis für die Scell durchzuführen; und wobei die zweite Sendeeinheit spezifisch dazu ausgebildet ist, in der Scell, die zweite Drahtlosnetzwerkkennung durch Verwendung eines ersten "Downlink Shared Channel" an das UE zu senden, wobei ein Sendekanal von "Scheduling"-Informationen, der dem ersten "Downlink Shared Channel" entspricht, in einem ersten gemeinsamen Suchraum eines Steuerkanals ist und der erste gemeinsame Suchraum eines Steuerkanals ein gemeinsamer Suchraum der Pcell oder ein gemeinsamer Suchraum der Scell ist; oder

die zweite Sendeeinheit spezifisch dazu ausgebildet ist, in der Scell, die zweite Drahtlosnetzwerkkennung durch Verwendung eines zweiten "Downlink Shared Channel" an das UE zu senden, wobei eine Ressource, die dem zweiten "Downlink Shared Channel" entspricht, eine voreingestellte Ressource ist, die einer Zellenkennung der Scell entspricht; oder

die zweite Sendeeinheit spezifisch dazu ausgebildet ist, durch Verwendung eines dritten "Downlink Shared Channel", die zweite Drahtlosnetzwerkkennung und eine voreingestellte Sequenz, die verwendet wird, um die zweite Drahtlosnetzwerkkennung zu identifizieren, in der Scell an das UE zu senden.

6. Basisstation nach Anspruch 5, wobei die erste Sendeeinheit spezifisch dazu ausgebildet ist, in der Pcell die erste Drahtlosnetzwerkkennung durch Rundsenden eines Systeminformationsblocks, SIB-1, an das UE zu senden; und die zweite Sendeeinheit spezifisch dazu ausgebildet ist, in der Scell die zweite Drahtlosnetzwerkkennung durch Verwendung des rundgesendeten Systeminformationsblocks, SIB-1, an das UE zu senden.

7. System, umfassend:
eine Basisstation, wobei die Basisstation umfasst:

eine erste Sendeeinheit (1201), die dazu ausgebildet ist, in einer Primärzelle, Pcell, eine erste Drahtlosnetzwerkkennung an ein Benutzergerät, UE, zu senden, wobei ein in der Pcell verwendeter Träger ein Träger in einem unlizenzierten Spektrum ist; und eine zweite Sendeeinheit (1202), die dazu ausgebildet ist, in einer Sekundärzelle, Scell, eine zweite Drahtlosnetzwerkkennung, welche dieselbe wie die erste Drahtlosnetzwerkkennung ist, an das UE zu senden, wobei ein in der Scell verwendeter Träger ein Träger in einem unlizenzierten Spektrum ist und die erste Drahtlosnetzwerkkennung/die zweite Drahtlosnetzwerkkennung einen Drahtlosnetzwerkbetreiber eindeutig identifiziert; und wobei

die zweite Sendeeinheit spezifisch dazu ausgebildet ist, in der Scell, die zweite Drahtlosnetzwerkkennung durch Verwendung eines ersten "Downlink Shared Channel" an das UE zu senden, wobei ein Sendekanal von "Scheduling"-Informationen, der dem ersten "Downlink Shared Channel" entspricht, in einem ersten gemeinsamen Suchraum eines Steuerkanals ist und der erste gemeinsame Suchraum eines Steuerkanals ein gemeinsamer Suchraum der Pcell oder ein gemeinsamer Suchraum der Scell ist; oder

die zweite Sendeeinheit spezifisch dazu ausgebildet ist, in der Scell, die zweite Drahtlosnetzwerkkennung durch Verwendung eines zweiten "Downlink Shared Channel" an das UE zu senden, wobei eine Ressource, die dem zweiten "Downlink Shared Channel" entspricht, eine voreingestellte Ressource ist, die einer Zellenkennung der Scell entspricht; oder

die zweite Sendeeinheit spezifisch dazu ausgebildet ist, durch Verwendung eines dritten "Downlink Shared Channel", die zweite Drahtlosnetzwerkkennung und eine voreingestellte Sequenz, die verwendet wird, um die zweite Drahtlosnetzwerkkennung zu identifizieren, in der Scell an das UE zu senden;
ein UE, wobei das UE umfasst:

ein Mittel, das dazu ausgebildet ist, die erste Drahtlosnetzwerkkennung, die in einer Pcell durch die Basisstation gesendet wird, zu empfangen und nach der zweiten Drahtlosnetzwerkkennung, die in der Scell durch die Basisstation gesendet wird, zu suchen und, wenn die zweite Drahtlosnetzwerkkennung empfangen wird und bestimmt wird, dass die zweite Drahtlosnetzwerkkennung mit der ersten Drahtlosnetzwerkkennung übereinstimmt, zu bestimmen, dass Kommunikation mit der Basisstation in der Scell durchgeführt werden kann, oder, wenn die zweite Drahtlosnetzwerkkennung nicht empfangen wird oder wenn die zweite Drahtlosnetzwerkkennung empfangen wird und bestimmt wird, dass die zweite Drahtlosnetzwerkkennung nicht mit der ersten Drahtlosnetzwerkkennung übereinstimmt, zu bestimmen, dass Kommunikation mit der Basisstation nicht in der Scell durchgeführt werden kann;

ein Mittel, das dazu ausgebildet ist, ein Signalmessergebnis für die Scell zu der Basisstation rückzumelden, wenn bestimmt wird, dass Kommunikation mit der Basisstation in der Scell durchgeführt werden kann; und

ein Mittel, das dazu ausgebildet ist, Rückmelden eines Signalmessergebnisses für die Scell zu der Basisstation oder Rückmelden von Rückmeldeinformationen zu der Basisstation, die anzeigen, dass ein Signalmessergebnis für die Scell ungültig ist, oder Rückmelden von Rückmeldeinformationen zu der Basisstation, welche die Basisstation anweisen, eine Zellenkennung der Scell zu ändern, zu überspringen;

wobei die Basisstation ferner umfasst:

eine "Scheduling"-Stopp-Einheit, die dazu ausgebildet ist: nachdem das erste Drahtlosnetzwerk, in der Pcell, an das UE gesendet wird und die zweite Drahtlosnetzwerkkennung, in der Scell, an das UE gesendet wird, wenn bestimmt wird, dass Rückmeldeinformationen, die durch das UE zurückgegeben werden und die ein Signalmessergebnis für die Scell umfassen, nicht empfangen werden, oder wenn bestimmt wird, dass Rückmeldeinformationen empfangen werden, die durch das UE zurückgegeben werden und die anzeigen, dass ein Signalmessergebnis für die Scell ungültig ist, oder wenn bestimmt wird, dass Rückmeldeinformationen empfangen werden, die durch das UE zurückgegeben werden und die anweisen, eine Zellenkennung der Scell zu ändern, die Zellenkennung der Scell zu ändern; und

eine "Scheduling"-Einheit, die dazu ausgebildet ist: nachdem die erste Drahtlosnetzwerkkennung, in der Pcell, an das UE gesendet wird und die zweite Drahtlosnetzwerkkennung, in der Scell, an das UE gesendet wird, wenn die Rückmeldeinformationen, die durch das UE zurückgegeben werden und die das Signalmessergebnis für die Scell umfassen, empfangen werden, Ressourcenkonfiguration und Daten-"Scheduling" für das UE gemäß dem Signalmessergebnis für die Scell durchzuführen.

8. Verfahren, umfassend:
   an einer Basisstation:

   Senden, in einer Primärzelle, Pcell, einer ersten Drahtlosnetzwerkkennung an ein Benutzergerät, UE, wobei ein in der Pcell verwendeter Träger ein Träger in einem unlizenzierten Spektrum ist; und

   Senden, in einer Sekundärzelle, Scell, einer zweiten Drahtlosnetzwerkkennung, welche dieselbe wie die erste Drahtlosnetzwerkkennung ist, an das UE, wobei ein in der Scell verwendeter Träger ein Träger in einem unlizenzierten Spektrum ist und die erste Drahtlosnetzwerkkennung/die zweite Drahtlosnetzwerkkennung einen Drahtlosnetzwerkbetreiber eindeutig identifiziert; und

   wobei das Senden, in der Scell, der zweiten Drahtlosnetzwerkkennung an das UE spezifisch umfasst:

   Senden, in der Scell, der zweiten Drahtlosnetzwerkkennung an das UE durch Verwendung eines ersten "Downlink Shared Channel", wobei ein Sendekanal von "Scheduling"-Informationen, der dem ersten "Downlink Shared Channel" entspricht, in einem ersten gemeinsamen Suchraum eines Steuerkanals ist und der erste gemeinsame Suchraum eines Steuerkanals ein gemeinsamer Suchraum der Pcell oder ein gemeinsamer Suchraum der Scell ist; oder

   Senden, in der Scell, der zweiten Drahtlosnetzwerkkennung an das UE durch Verwendung eines zweiten "Downlink Shared Channel", wobei eine Ressource, die dem zweiten "Downlink Shared Channel" entspricht, eine voreingestellte Ressource ist, die einer Zellenkennung der Scell entspricht; oder

   Senden, in der Scell an das UE durch Verwendung eines dritten "Downlink Shared Channel", der zweiten Drahtlosnetzwerkkennung und einer voreingestellten Sequenz, die verwendet wird, um die zweite Drahtlosnetzwerkkennung zu identifizieren;

an dem UE:

Empfangen der ersten Drahtlosnetzwerkkennung, die durch die Basisstation in einer Pcell gesendet wird, und Suchen nach der zweiten Drahtlosnetzwerkkennung, die durch die Basisstation in der Scell gesendet wird, und, wenn die zweite Drahtlosnetzwerkkennung empfangen wird und bestimmt wird, dass die zweite Drahtlosnetzwerkkennung mit der ersten Drahtlosnetzwerkkennung übereinstimmt, Bestimmen, dass Kommunikation mit der Basisstation in der Scell durchgeführt werden kann, oder, wenn die zweite Drahtlosnetzwerkkennung nicht empfangen wird oder wenn die zweite Drahtlosnetzwerkkennung empfangen wird und bestimmt wird, dass die zweite Drahtlosnetzwerkkennung nicht mit der ersten Drahtlosnetzwerkkennung übereinstimmt, Bestimmen, dass Kommunikation mit der Basisstation nicht in der Scell durchgeführt werden kann;

Rückmelden eines Signalmessergebnisses für die Scell zu der Basisstation, wenn bestimmt wird, dass Kommunikation mit der Basisstation in der Scell durchgeführt werden kann; oder Überspringen von Rückmelden eines Signalmessergebnisses für die Scell zu der Basisstation oder Rückmelden von Rückmeldeinformationen zu der Basisstation, die anzeigen, dass ein Signalmessergebnis für die Scell ungültig ist, oder Rückmelden von Rückmeldeinformationen zu der Basisstation, welche die Basisstation anweisen, eine Zellenkennung der Scell zu ändern;

an der Basisstation:

wenn bestimmt wird, dass Rückmeldeinformationen, die durch das UE zurückgegeben werden und die ein Signalmessergebnis für die Scell umfassen, nicht empfangen werden, oder wenn bestimmt wird, dass Rückmeldeinformationen empfangen werden, die durch das UE zurückgegeben werden und die anzeigen, dass ein Signalmessergebnis für die Scell ungültig ist, oder wenn bestimmt wird, dass Rückmeldeinformationen empfangen werden, die durch das UE zurückgegeben werden und die anweisen, eine Zellenkennung der Scell zu ändern, Ändern der Zellenkennung der Scell; oder, wenn die Rückmeldeinformationen, die durch das UE zurückgegeben werden und die das Signalmessergebnis für die Scell umfassen, empfangen werden, Durchführen von Ressourcenkonfiguration und Daten-"Scheduling" für das UE gemäß dem Signalmessergebnis für die Scell.

## Revendications

1. Procédé effectué par une base station pour indiquer d'utiliser un spectre, comprenant :

l'envoi (201), dans une cellule primaire, Pcell, d'un premier identifiant de réseau sans fil à un équipement utilisateur, UE, dans lequel une porteuse utilisée dans la Pcell est une porteuse dans un spectre sous licence ; et

l'envoi (202) à l'UE, dans une cellule secondaire, Scell, d'un deuxième identifiant de réseau sans fil qui est le même que le premier identifiant de réseau sans fil, dans lequel une porteuse utilisée dans la Scell est une porteuse dans un spectre sans licence, et le premier identifiant de réseau sans fil/le deuxième identifiant de réseau sans fil identifie de manière unique un seul opérateur de réseau sans fil ;

lorsqu'il est déterminé que des informations de rétroaction qui sont renvoyées par l'UE et qui comprennent un résultat de mesure de signal pour la Scell ne sont pas reçues, ou lorsqu'il est déterminé que des informations de rétroaction qui sont renvoyées par l'UE et qui indiquent qu'un résultat de mesure de signal pour la Scell est invalide sont reçues, ou lorsqu'il est déterminé que des informations de rétroaction qui sont renvoyées par l'UE et qui ordonnent de changer un identifiant de cellule de la Scell sont reçues, le changement de l'identifiant de cellule de la Scell ; et

lorsque les informations de rétroaction qui sont renvoyées par l'UE et qui comprennent le résultat de mesure de signal pour la Scell sont reçues, l'exécution d'une configuration de ressources et d'une planification de données pour l'UE selon le résultat de mesure de signal pour la Scell ; et

dans lequel l'envoi, dans la Scell, du deuxième identifiant de réseau sans fil à l'UE comprend spécifiquement :

l'envoi, dans la Scell, du deuxième identifiant de réseau sans fil à l'UE en utilisant un premier canal partagé de liaison descendante, dans lequel un canal de transmission d'informations de planification qui correspond au premier canal partagé de liaison descendante se trouve dans un premier espace de recherche commun d'un canal de commande, et le premier espace de recherche commun d'un canal de commande est un espace de recherche commun de la Pcell ou un espace de recherche commun de la Scell ; ou

l'envoi, dans la Scell, du deuxième identifiant de réseau sans fil à l'UE en utilisant un deuxième canal partagé de liaison descendante, dans lequel une ressource qui correspond au deuxième canal partagé de liaison descendante est une ressource préréglée qui correspond à un identifiant de cellule de la Scell ; ou

l'envoi, dans la Scell à l'UE en utilisant un troisième canal partagé de liaison descendante, du deuxième identifiant de réseau sans fil et d'une séquence préréglée qui est utilisée pour identifier le deuxième identifiant de réseau sans fil.

**2.** Procédé selon la revendication 1, dans lequel l'envoi à l'UE, dans la Scell, en utilisant le troisième canal partagé de liaison descendante, du deuxième identifiant de réseau sans fil et de la séquence préréglée qui est utilisée pour identifier le deuxième identifiant de réseau sans fil comprend spécifiquement :
l'envoi du deuxième identifiant de réseau sans fil et de la séquence préréglée à l'UE sur le troisième canal partagé de liaison descendante d'une manière consistant à brouiller la séquence préréglée en utilisant le deuxième identifiant de réseau sans fil, dans lequel la séquence préréglée est une ou plusieurs des séquences suivantes : une séquence de signal de synchronisation primaire, PSS, une séquence de signal de synchronisation secondaire, SSS, et une séquence de signal de référence spécifique à la cellule, CRS.

**3.** Procédé selon la revendication 1, dans lequel le premier identifiant de réseau sans fil/le deuxième identifiant de réseau sans fil est un code de pays mobile, MCC, et un code de réseau mobile, MNC, dans un identifiant de réseau mobile terrestre public, PLMN ID, ou le premier identifiant de réseau sans fil/le deuxième identifiant de réseau sans fil est un MNC dans un PLMN ID.

**4.** Procédé selon la revendication 1, dans lequel l'envoi, dans la Pcell, du premier identifiant de réseau sans fil à l'UE comprend spécifiquement :

l'envoi, dans la Pcell, du premier identifiant de réseau sans fil à l'UE en diffusant un bloc d'informations système, SIB-1 ; et
l'envoi, dans la Scell, du deuxième identifiant de réseau sans fil à l'UE comprend spécifiquement :
l'envoi, dans la Scell, du deuxième identifiant de réseau sans fil à l'UE en utilisant le bloc d'informations système, SIB-1, diffusé.

**5.** Station de base, comprenant :

une première unité d'envoi (1201), configurée pour envoyer, dans une cellule primaire, Pcell, un premier identifiant de réseau sans fil à l'UE, dans lequel une porteuse utilisée dans la Pcell est une porteuse dans un spectre sous licence ; et
une deuxième unité d'envoi (1202), configurée pour envoyer à l'UE, dans une cellule secondaire, Scell, un deuxième identifiant de réseau sans fil qui est le même que le premier identifiant de réseau sans fil, dans lequel une porteuse utilisée dans la Scell est une porteuse dans un spectre sans licence, et le premier identifiant de réseau sans fil/le deuxième identifiant de réseau sans fil identifie de manière unique un seul opérateur de réseau sans fil ;
une unité d'arrêt de planification, configurée pour : après que le premier réseau sans fil a été envoyé, dans la Pcell, à l'UE et le deuxième identifiant de réseau sans fil a été envoyé, dans la Scell, à l'UE, lorsqu'il est déterminé que des informations de rétroaction qui sont renvoyées par l'UE et qui comprennent un résultat de mesure de signal pour la Scell ne sont pas reçues, ou lorsqu'il est déterminé que des informations de rétroaction qui sont renvoyées par l'UE et qui indiquent qu'un résultat de mesure de signal pour la Scell est invalide sont reçues, ou lorsqu'il est déterminé que des informations de rétroaction qui sont renvoyées par l'UE et qui ordonnent de changer un identifiant de cellule de la Scell sont reçues, changer l'identifiant de cellule de la Scell ; et
une unité de planification, configurée pour : après que le premier identifiant de réseau sans fil a été envoyé, dans la Pcell, à l'UE et le deuxième identifiant de réseau sans fil a été envoyé, dans la Scell, à l'UE, lorsque les informations de rétroaction qui sont renvoyées par l'UE et qui comprennent le résultat de mesure de signal pour la Scell sont reçues, effectuer une configuration de ressources et une planification de donnée pour l'UE selon le résultat de mesure de signal pour la Scell ; et dans lequel la deuxième unité d'envoi est spécifiquement configurée pour envoyer, dans la Scell, le deuxième identifiant de réseau sans fil à l'UE en utilisant un premier canal partagé de liaison descendante, dans lequel un canal de transmission d'informations de planification qui correspond au premier canal partagé de liaison descendante se trouve dans un premier espace de recherche commun d'un canal de commande, et le premier espace de recherche commun d'un canal de commande est un espace de recherche commun de la Pcell ou un espace de recherche commun de la Scell ; ou

la deuxième unité d'envoi est spécifiquement configurée pour envoyer, dans la Scell, le deuxième identifiant de réseau sans fil à l'UE en utilisant un deuxième canal partagé de liaison descendante, dans lequel une ressource qui correspond au deuxième canal partagé de liaison descendante est une ressource préréglée qui correspond à un identifiant de cellule de la Scell ; ou

la deuxième unité d'envoi est spécifiquement configurée pour envoyer, dans la Scell à l'UE en utilisant un troisième canal partagé de liaison descendante, le deuxième identifiant de réseau sans fil et une séquence préréglée qui est utilisée pour identifier le deuxième identifiant de réseau sans fil.

6. Station de base selon la revendication 5, dans laquelle la première unité d'envoi est spécifiquement configurée pour envoyer, dans la Pcell, le premier identifiant de réseau sans fil à l'UE en diffusant un bloc d'informations système, SIB-1 ; et la deuxième unité d'envoi est spécifiquement configurée pour envoyer, dans la Scell, le deuxième identifiant de réseau sans fil à l'UE en utilisant le bloc d'informations système, SIB-1, diffusé.

7. Système, comprenant :
une station de base, la station de base comprenant :

une première unité d'envoi (1201), configurée pour envoyer, dans une cellule primaire, Pcell, un premier identifiant de réseau sans fil à un équipement utilisateur, UE, dans lequel une porteuse utilisée dans la Pcell est une porteuse dans un spectre sans licence ; et
une deuxième unité d'envoi (1202), configurée pour envoyer à l'UE, dans une cellule secondaire, Scell, un deuxième identifiant de réseau sans fil qui est le même que le premier identifiant de réseau sans fil, dans lequel une porteuse utilisée dans la Scell est une porteuse dans un spectre sans licence, et le premier identifiant de réseau sans fil/le deuxième identifiant de réseau sans fil identifie de manière unique un seul opérateur de réseau sans fil ;
et dans lequel
la deuxième unité d'envoi est spécifiquement configurée pour envoyer, dans la Scell, le deuxième identifiant de réseau sans fil à l'UE en utilisant un premier canal partagé de liaison descendante, dans lequel un canal de transmission d'informations de planification qui correspond au premier canal partagé de liaison descendante se trouve dans un premier espace de recherche commun d'un canal de commande, et le premier espace de recherche commun d'un canal de commande est un espace de recherche commun de la Pcell ou un espace de recherche commun de la Scell ; ou
la deuxième unité d'envoi est spécifiquement configurée pour envoyer, dans la Scell, le deuxième identifiant de réseau sans fil à l'UE en utilisant un deuxième canal partagé de liaison descendante, dans lequel une ressource qui correspond au deuxième canal partagé de liaison descendante est une ressource préréglée qui correspond à un identifiant de cellule de la Scell ; ou
la deuxième unité d'envoi est spécifiquement configurée pour envoyer, dans la Scell à l'UE en utilisant un troisième canal partagé de liaison descendante, le deuxième identifiant de réseau sans fil et une séquence préréglée qui est utilisée pour identifier le deuxième identifiant de réseau sans fil ;
un UE, l'UE comprenant :

des moyens configurés pour recevoir le premier identifiant de réseau sans fil qui est envoyé dans une Pcell par la station de base, et chercher le deuxième identifiant de réseau sans fil qui est envoyé dans la Scell par la station de base, et lorsque le deuxième identifiant de réseau sans fil est reçu, et qu'il est déterminé que le deuxième identifiant de réseau sans fil est cohérent avec le premier identifiant de réseau sans fil, déterminer que la communication avec la station de base peut être effectuée dans la Scell, ou lorsque le deuxième identifiant de réseau sans fil n'est pas reçu, ou
lorsque le deuxième identifiant de réseau sans fil est reçu et il est déterminé que le deuxième identifiant de réseau sans fil est incohérent avec le premier identifiant de réseau sans fil, déterminer que la communication avec la station de base ne peut pas être effectuée dans la Scell ;
des moyens configurés pour renvoyer un résultat de mesure de signal pour la Scell à la station de base lorsqu'il est déterminé que la communication avec la station de base peut être effectuée dans la Scell ; et des moyens configurés pour ignorer le renvoi d'un résultat de mesure de signal pour la Scell à la station de base, ou renvoyer à la station de base des informations de rétroaction qui indiquent qu'un résultat de mesure de signal pour la Scell est invalide, ou renvoyer à la station de base des informations de rétroaction qui ordonnent à la station de base de changer un identifiant de cellule de la Scell ;

la station de base comprenant en outre :

une unité d'arrêt de planification, configurée pour : après que le premier réseau sans fil a été envoyé, dans la Pcell, à l'UE et le deuxième identifiant de réseau sans fil a été envoyé, dans la Scell, à l'UE, lorsqu'il est déterminé que des informations de rétroaction qui sont renvoyées par l'UE et qui comprennent un résultat de mesure de signal pour la Scell ne sont pas reçues, ou lorsqu'il est déterminé que des informations de rétroaction qui sont renvoyées par l'UE et qui indiquent qu'un résultat de mesure de signal pour la Scell est invalide sont reçues, ou lorsqu'il est déterminé que des informations de rétroaction qui sont renvoyées par l'UE et qui ordonnent de changer un identifiant de cellule de la Scell sont reçues, changer l'identifiant de cellule de la Scell ; et

une unité de planification, configurée pour : après que le premier identifiant de réseau sans fil a été envoyé, dans la Pcell, à l'UE et le deuxième identifiant de réseau sans fil a été envoyé, dans la Scell, à l'UE, lorsque les informations de rétroaction qui sont renvoyées par l'UE et qui comprennent le résultat de mesure de signal pour la Scell sont reçues, effectuer une configuration de ressources et une planification de donnée pour l'UE selon le résultat de mesure de signal pour la Scell.

8. Procédé, comprenant :
au niveau d'une station de base :

l'envoi, dans une cellule primaire, Pcell, d'un premier identifiant de réseau sans fil à un équipement utilisateur, UE, dans lequel une porteuse utilisée dans la Pcell est une porteuse dans un spectre sans licence ; et
l'envoi, dans une cellule secondaire, Scell, d'un deuxième identifiant de réseau sans fil qui est le même que le premier identifiant de réseau sans fil à l'UE, dans lequel une porteuse utilisée dans la Scell est une porteuse dans un spectre sans licence, et le premier identifiant de réseau sans fil/le deuxième identifiant de réseau sans fil identifie de manière unique un seul opérateur de réseau sans fil ; et
dans lequel l'envoi, dans la Scell, du deuxième identifiant de réseau sans fil à l'UE comprend spécifiquement :

l'envoi, dans la Scell, du deuxième identifiant de réseau sans fil à l'UE en utilisant un premier canal partagé de liaison descendante, dans lequel un canal de transmission d'informations de planification qui correspond au premier canal partagé de liaison descendante se trouve dans un premier espace de recherche commun d'un canal de commande, et le premier espace de recherche commun d'un canal de commande est un espace de recherche commun de la Pcell ou un espace de recherche commun de la Scell ; ou
l'envoi, dans la Scell, du deuxième identifiant de réseau sans fil à l'UE en utilisant un deuxième canal partagé de liaison descendante, dans lequel une ressource qui correspond au deuxième canal partagé de liaison descendante est une ressource préréglée qui correspond à un identifiant de cellule de la Scell ; ou
l'envoi, dans la Scell à l'UE en utilisant un troisième canal partagé de liaison descendante, du deuxième identifiant de réseau sans fil et d'une séquence préréglée qui est utilisée pour identifier le deuxième identifiant de réseau sans fil ;
au niveau de l'UE :

la réception du premier identifiant de réseau sans fil qui est envoyé dans une Pcell par la station de base, et la recherche du deuxième identifiant de réseau sans fil qui est envoyé dans la Scell par la station de base, et lorsque le deuxième identifiant de réseau sans fil est reçu, et qu'il est déterminé que le deuxième identifiant de réseau sans fil est cohérent avec le premier identifiant de réseau sans fil, la détermination que la communication avec la station de base peut être effectuée dans la Scell, ou lorsque le deuxième identifiant de réseau sans fil n'est pas reçu, ou lorsque le deuxième identifiant de réseau sans fil est reçu et qu'il est déterminé que le deuxième identifiant de réseau sans fil est incohérent avec le premier identifiant de réseau sans fil, la détermination que la communication avec la station de base ne peut pas être effectuée dans la Scell ;

le renvoi d'un résultat de mesure de signal pour la Scell à la station de base lorsqu'il est déterminé que la communication avec la station de base peut être effectuée dans la Scell ;

l'omission du renvoi d'un résultat de mesure de signal pour la Scell à la station de base, ou le renvoi à la station de base des informations de rétroaction qui indiquent qu'un résultat de mesure de signal pour la Scell est invalide, ou le renvoi à la station de base des informations de rétroaction qui ordonnent à la station de base de changer un identifiant de cellule de la Scell ;

au niveau de la station de base :

lorsqu'il est déterminé que des informations de rétroaction qui sont renvoyées par l'UE et qui comprennent un résultat de mesure de signal pour la Scell ne sont pas reçues, ou lorsqu'il est déterminé que des informations de rétroaction qui sont renvoyées par l'UE et qui indiquent qu'un résultat de mesure de signal pour la Scell est invalide sont reçues, ou lorsqu'il est déterminé que des informations de rétroaction qui sont renvoyées par l'UE et qui ordonnent de changer un identifiant de cellule de la Scell sont reçues, le changement de l'identifiant de cellule de la Scell ; ou

lorsque les informations de rétroaction qui sont renvoyées par l'UE et qui comprennent le résultat de mesure de signal pour la Scell sont reçues, l'exécution d'une configuration de ressources et d'une planification de données pour l'UE selon le résultat de mesure de signal pour la Scell.

Macro base
station of an
operator 1

Macro base
station of an
operator 2

F1: Licensed
spectrum of the
operator 1

F2: Licensed
spectrum of the
operator 2

F3: Unlicensed
spectrum used by
the two operators

F1

Cell 1
Operator 1

UE1

Cell 2
Operator 2

Cell 2
Operator 1

F2

FIG. 1

201

Send, in a primary cell (Pcell), a first wireless network identifier to UE, where a carrier used in the Pcell is a carrier in a non-shared spectrum

202

Send, in a Scell, a second wireless network identifier that is the same as the first wireless network identifier to the UE, so that the UE determines whether the UE can communicate with a network side apparatus in the Scell, where a carrier used in the Scell is a carrier in a shared spectrum, and the first wireless network identifier/the second wireless network identifier uniquely identifies one wireless network operator

FIG. 2

Primary cell

Secondary cell

Shared channel
having PLMN
information

FIG. 3

Primary cell

Secondary cell

First downlink
shared channel
having PLMN
information

FIG. 4

Pcell

Scell

First downlink
shared channel
having PLMN
information

FIG. 5

Pcell

Scell

Second
downlink
shared channel
transmitted on
a particular
resource

FIG. 6

```
                                                    1201
┌─────────────────────────────────────┐
│          First sending unit          │
└─────────────────────────────────────┘
                    │
                    │                   1202
┌─────────────────────────────────────┐
│         Second sending unit          │
└─────────────────────────────────────┘
```

FIG. 7

**EP 3 065 482 B1**

## REFERENCES CITED IN THE DESCRIPTION

**Patent documents cited in the description**

- WO 2013131257 A1
- US 2009047956 A1
- WO 2012106843 A1
- WO 2013131258 A1
- US 2012094681 A1